# EUROPEAN PATENT APPLICATION

(11) **EP 3 400 856 A1**
(43) Date of publication of application: **14.11.2018**
(21) Application number: 17170395.2
(22) Date of filing: 10.05.2017
(51) Int. Cl.: A47J 43/07, A47J 43/08, B01F 15/00

(54) **A METHOD AND COOKING APPARATUS FOR PREPARING FOOD MATERIALS**

(71) Applicant: Koninklijke Philips N.V., 5656 AE Eindhoven (NL)
(72) Inventor: TANG, Jiani, 5656 AE Eindhoven (NL); TAN, Jingwei, 5656 AE Eindhoven (NL)
(74) Representative: de Haan, Poul Erik

(57) **Abstract**

The invention provides a method for preparing food materials (3) within a cooking apparatus (1), wherein the cooking apparatus (1) includes a stirrer (4) with a stirring element (14) and an actuator (15) configured for driving the stirring element (14), and wherein the method comprises:
a) stirring the food materials (3) in a cooking space (2) of the cooking apparatus (1) by the stirring element (14) with heat applied by a heat source (5); and
b) adjusting the introduction of the heat into the cooking space (2) by the heat source (5) and/or the rotation speed of the stirrer;
characterized in that the amount of the heat being applied into the cooking space (2) and/or the rotation speed of the stirrer are at least controlled based on a resistance indicating signal being representative for the current resistance of the food materials (3) being cooked in the cooking space (2), and the resistance indicating signal is generated by means of the stirrer (4). Furthermore, the invention provides a cooking apparatus that is prepared to execute the inventive method.

## Description

### FIELD OF THE INVENTION

The invention relates to a method and cooking apparatus for preparing food materials in a cooking space.

### BACKGROUND OF THE INVENTION

Electronic cooking apparatuses with control means are known in the art. US2013125763, for instance, describes a control device for a cooking appliance, the cooking appliance including a cooking chamber designed to receive at least one predetermined food or a plurality of ingredients of a predetermined recipe, and a heating component for heating the cooking chamber. The control device includes a control unit arranged to determine at least one combination of predetermined cooking parameters as a function at least of the specific surface area of the at least one unitary element of the at least one predetermined food or the at least one ingredient of the plurality of ingredients of the predetermined recipe inserted into the cooking chamber of the cooking appliance, the specific surface area being estimated from descriptive parameters of the at least one unitary element of the predetermined food or the at least one ingredient from among the plurality of ingredients of the predetermined recipe.

### SUMMARY OF THE INVENTION

Such cooking apparatuses regularly have a stirrer on a bottom of the cooking space, by means of which the food materials can be automatically stirred in the cooking space during cooking. Such automatic stirring brings tremendous convenient advantages while cooking recipes, in particular where stirring is essential, such as for risottos, fruit jams, etc. Preparing such foods usually takes hours to cook, while stirring has to be executed continuously. However, in the case of known cooking devices, the automatic stirring frequently leads to a burning-up of the food materials in the cooking space, so that an unattended cooking operation is often not possible. For instance, while cooking tomato jam, cooking power and cooking time can vary due to food ingredients type and amount, etc. Overflow and overheated (burnt) food materials are common issues while cooking jam in a cooking apparatus that uses automatic stirring.

It is therefore an object of the invention to at least partially solve the problems described with reference to the prior art and, in particular, to provide a method for preparing food materials by which a burning of the food material may be avoided and/or more nutrients are preserved. In addition, a cooking apparatus is provided for cooking food materials, with which a burning of the food materials may be avoided and/or more nutrients are preserved. The present invention may have as object to overcome or ameliorate at least one of the disadvantages of the prior art, or to provide a useful alternative.

These objects are achieved by a method and a cooking apparatus according to the features of the independent claims. Further advantageous embodiments of the invention are provided in the dependent claims. It should be pointed out that the features listed individually in the dependent claims can be combined in any technologically reasonable manner and define further embodiments of the invention. Moreover, the features specified in the claims are further specified and explained in the description, wherein further preferred embodiments of the invention are described.

The method according to the invention for preparing food materials within a cooking apparatus, wherein the cooking apparatus includes a stirrer with a stirring element and an actuator configured for driving the stirring element, comprises the following features:
a) stirring the food materials in a cooking space of the cooking apparatus by the stirring element with heat applied by a heat source; and
b) adjusting the introduction of the heat into the cooking space by the heat source or a rotation speed of the stirrer;
wherein the amount of the heat being applied into the cooking space or the rotation speed is at least controlled based on a resistance indicating signal being representative for the current resistance of the food materials being stirred and cooked in the cooking space, and the resistance indicating signal is generated by means of the stirrer.

With such cooking apparatus it may be possible to better control a cooking process, such that burning of the food materials may be avoided and/or more nutrients are preserved, as there may be a direct control between the status of the product and the cooking parameters, especially the introduction of heat.

The cooking apparatus in particular comprises a cooking space, in which the food materials, comprising e.g. meat, vegetables, and/or fruits, and the liquids can be cooked. The cooking space has an opening through which the food materials can be filled in the cooking space. During cooking the opening can be open or at least partly closed by a cover. The liquid, like water, oil and/or melted fat, can be contained in the food materials and/or can be separately added.

In the cooking space the food materials can be stirred by a stirrer with a stirrer element and an actuator configured for driving the stirring element. The stirring element is preferably connected to the actuator by an axis, which preferably extends through the bottom of the cooking space. Furthermore, the axis may in embodiments be vertically orientated. The stirring element can be driven by the actuator via the axis in a clockwise or anti-clockwise direction. Preferably, the rotation direction of the stirring element (i.e. clockwise or counterclockwise) can be chosen e.g. based on the food material to be cooked and/or a possible recipe provided for preparing said food materials. The stirring element is at least partly arranged within the cooking space, wherein the stirring element preferably extends from a bottom of the cooking space upwards and/or from the axis in at least one radial direction. For instance, the stirring element can extend from the axis to an outer wall which surrounds the cooking space. In addition the stirring element consists preferably at least partly of plastic and/or metal. The actuator can be formed as (including) an electric motor. The cooking apparatus further comprises a heat source, e.g. an electrical heat source, with which the food materials and possibly an added liquid and/or a liquid leaked from (one or more of) the food material(s) are heatable in the cooking space. In addition, the cooking apparatus includes a data feedback system being capable to control the heat source and/or the actuator of the stirrer, in particular regarding its rotation speed and/or rotation direction, based, for instance, on a predetermined recipe. The data feedback system can, for instance, be a microprocessor.

Cooking food materials may typically include (at least) three phases. In a first heating up phase the food materials are heated up to a boiling point. In a second boiling phase the food materials are boiled until they are thoroughly cooked and become soft and (partly) decomposed. During the second boiling phase water is evaporated and the food materials and/or nutrients of the food materials get concentrated. Depending on the amount of liquids left, two different situations can be distinguished: a. still including a significant amount of liquid, for example in the case of a soup or stewed food and b. the liquid being almost evaporated, for example in the case of jams or risottos. In a third dry heat phase the liquid e.g. water is further evaporated. In this case the temperature of the food materials will rise above 100 °C (degree centigrade) causing the food materials to start to burn.

In step a) of the proposed method for preparing food materials the food materials are stirred in the cooking space (with the liquids) by the stirring element. During the stirring of the food materials heat is applied by the heat source, such that the food materials are heated, boiled, and/or fried in the cooking space.

In step b) of the proposed method for preparing food materials the introduction of the heat into the cooking space by the heat source or the rotation speed of the stirrer is adjusted, for instance, by the data feedback system and in particular based on predetermined recipe that is, for instance, stored in the data feedback system. During step b) the amount of the heat being applied into the cooking space or the rotation speed of the stirrer are at least controlled based on a resistance indicating signal being representative for the current resistance of the food materials being stirred and cooked in the cooking space. That is, the heating power, the rotation speed, the cooking time and/or a cooking end time, etc. being given by the recipe are adjusted based on the resistance indicating signal. The resistance of the food materials is a measure of its resistance to gradual deformation by shear stress or tensile stress. Therefore, e.g. for jam, the resistance indicating signal could also be a viscosity indicating signal being representative for the current viscosity of the food materials being cooked in the cooking space. Furthermore, e.g. for risotto, the resistance indicating signal could also be an adhesiveness indicating signal being representative for the current adhesiveness of the food materials being cooked in the cooking space. Moreover, e.g. for stir-fried vegetables, the resistance indicating signal could also be a density indicating signal being representative for the current density of the food materials being cooked in the cooking space. Due to the evaporation of the liquids during the cooking process of the food materials the resistance, viscosity, adhesiveness, or density of food materials increase, so that the resistance, viscosity, adhesiveness, or density of the food materials can be used as an indicator of a progress of the cooking process. The resistance indicating signal is generated by means of the stirrer. This means in particular that the resistance of the food materials is measured, monitored and/or recorded by the help of at least one element of the stirrer, e.g. the actuator and/or at least a part of the stirring element of the stirrer. That also means that the stirrer itself can be used as a sensor. By the proposed method an over-heating and burning of the food materials can be avoided and more nutrients are retained, since the duration of the cooking process is adjusted based on the resistance of the food materials being cooked.

Preferably the resistance indicating signal is based on an electric power consumption of the actuator for maintaining a predetermined (real-time) stirring speed (rotation speed) during the cooking period. Due to the increasing resistance of the food materials during cooking, the electric power consumption being necessary for maintaining a predetermined (real-time) fixed, and/or constant rotation speed of the stirring element (e.g. 30 rounds per minute) increases. Thus, the development of the electric power consumption of the actuator of the stirrer can be used as an indicator or monitor parameter for a status of the food materials, which is in particular the resistance of the food materials.

Moreover, it is preferred that the stirring element comprises a first side towards an anti-clockwise rotational direction and a second side towards a clockwise rotational direction; and the resistance indicating signal is based on a temperature difference between a first temperature sensed from the first side and a second temperature sensed from the second side; and/or a pressure difference between a first pressure sensed from the first side and a second pressure sensed from the second side. The first side is in particular a first outer surface towards the anti-clockwise direction of the stirring element and/or the second side is a second outer surface towards the clockwise rotational direction of the stirring element.

During step b) if the stirring element is rotated in the anti-clockwise rotational direction, the food materials accumulate on the first side of the stirring element and an empty space, which, for instance is a space with significantly less or even essentially no food materials, arises and enlarges on the second side of the stirring element due to the evaporation of liquid and thus the increasing resistance of the food materials. During step b) if the stirring element is rotated in the clockwise rotational direction, the food materials accumulate on the second side of the stirring element and an empty space arises and enlarges on the first side of the stirring element respectively due to the evaporation of liquid and thus the increasing resistance of the food materials. Hence, the first temperature and/or the first pressure on the first side and the second temperature and/or the second pressure of the second side differ from each other, since one side contacts the food materials and the other side contacts with air. Therefore, the temperature difference between the first temperature from the first side and the second temperature from the second side as well as the pressure difference between the first pressure from the first side and the second pressure from the second side can be used as an indicator for the resistance of the food materials and for controlling the amount of the heat being applied into the cooking space, that means in particular for adjusting the cooking end point.

Evaporation of liquid may refer to evaporation of liquid from the food material(s) and when liquid is added, also to evaporation of added liquid. In the herein described invention, in embodiments no liquid is added. In yet other embodiments, a liquid may be added, such as one or more of oil, water, milk and ethanol.

Furthermore, it is preferred that the first temperature sensed using a first temperature sensor arranged at the first side and the second temperature sensed using a second temperature sensor arranged at the second side. The first temperature sensor and/or the second temperature sensor are preferably formed as thermocouples, which produce a temperature-dependent voltage as a result of a thermoelectric effect, wherein this voltage can be interpreted to measure the temperature. The first temperature sensor can be embedded on the first side of the stirring element and/or the second temperature sensor can be embedded on the second side of the stirring element. With the help of the first temperature sensor and the second temperature sensor the first temperature and the second temperature can be measured very accurately.

Preferably, the first pressure is sensed using a first pressure sensor arranged at the first side and the second pressure is sensed using a second pressure sensor arranged at the second side. The first pressure sensor and/or the second pressure sensor are preferably formed as capacitive pressure sensors, which in particular use a diaphragm and pressure cavity to create a variable capacitor to detect strain due to applied pressure. The capacitance decreases when the pressure deforms the diaphragm. With the help of the first pressure sensor and the second pressure sensor the first pressure and the second pressure can be measured very accurately.

Furthermore, it is preferred that a start point and an end point of adjusting the introduction of the heat into the cooking space or the rotational speed of the stirrer through monitoring the electric power consumption of the actuator are determined by comparing a slope of a first curve of the electric power consumption with a start threshold and comparing an absolute value of the electric power consumption with an end threshold respectively. Comparing the slope of the first curve of the electric power consumption with the start threshold allows detecting the beginning of the formation of the empty space. Furthermore, comparing the absolute value of the electric power consumption with the end threshold allows detecting the cooking end point.

Moreover, it is preferred that a start point and an end point of adjusting the introduction of the heat into the cooking space or rotation speed of the stirrer through monitoring the pressure difference are determined by comparing a slope of a second curve of the pressure difference with a start threshold and an end threshold, respectively. Comparing the slope of the curve of the pressure difference with the start threshold allows detecting the beginning of the formation of the empty space. Furthermore, comparing the slope of the second curve of the pressure difference with the end threshold allows detecting the cooking end point.

Preferably a start point and an end point of adjusting the introduction of the heat into the cooking space or the rotation speed of the stirrer through monitoring the temperature difference are determined by comparing the difference value with zero and an end threshold, respectively. This means in particular that the amount of heat being applied into the cooking space and/or the rotation speed of the stirrer are reduced, for instance and preferably to zero, when the temperature difference has reached the end threshold. The end threshold can be for example 0∼5 °C, from practical angle. Comparing the difference value with zero allows detecting the beginning of the formation of the empty space. Furthermore, comparing the difference value with the end threshold allows detecting the cooking end point.

Moreover, it is preferred that before step a) the method further comprises step a') receiving food materials input information from a user interface, then predetermining a relationship between the food materials input information and the resistance indicating signal for subsequent heat introduction into the cooking space or for subsequent adaption of the rotation speed of the stirrer. The user interface can in particularly be formed as a control knob, a touch screen or the like. This allows for instance adjusting the start threshold and end threshold.

According to a further aspect of the invention a cooking apparatus for cooking food materials therein is provided, which comprises:
a cooking space for cooking the food materials;
a heat source for introducing heat into the cooking space;
a stirrer for stirring the food materials in the cooking space, the stirrer includes a stirring element and an actuator configured for driving the stirring element or adjusting its rotation speed; and
a data feedback system configured for controlling the heat source or the rotation speed of the stirrer based on resistance indicating signal generated by means of the stirrer.

Regarding the features of the apparatus it is referred to the description of the method. The cooking apparatus is in particular configured to execute the inventive method.

Preferably the data feedback system is configured to monitor an electric power consumption of the actuator for maintaining a predetermined (real-time) stirring speed during the cooking period. The development of the electric power consumption of the actuator of the stirrer can be used as an indicator or monitor parameter for the status of the food materials, which is in particular the resistance of the food materials.

Furthermore, it is preferred that the stirring element comprises a first side (during use e.g. configured towards the anti-clockwise rotational direction) and a second side (during use e.g. configured) towards the clockwise rotational direction; and
the data feedback systems is configured to monitor a temperature difference between the first temperature sensed from the first side and a second temperature sensed from the second side; and/or a pressure difference between a first pressure sensed from the first side and a second pressure sensed from the second side.

Hence, in embodiments the stirring element may comprise a first side and a second side, with at least part of the stirring element in between the first side and the second side. In embodiments, in operation the first side may be configured towards the anti-clockwise rotational direction and the second side may be configured towards the clockwise rotational direction.

Moreover, it is preferred that the stirrer further includes a first temperature sensor arranged at the first side for sensing the first temperature and a second temperature sensor arranged at the second side for sensing the second temperature. With the help of the first temperature sensor and the second temperature sensor the first temperature and the second temperature can be measured very accurately.

Furthermore, it is preferred that the stirrer further includes a first pressure sensor arranged at the first side for sensing the first pressure and a second pressure sensor arranged at the second side for sensing the second pressure. With the help of the first pressure sensor and the second pressure sensor the first pressure and the second pressure can be measured very accurately.

Moreover, it is preferred that the cooking apparatus further comprises a user interface for receiving food materials input information, and the data feedback system is configured to take at least one of the actions listed below based on a predetermined relationship between the food materials input information and the resistance indicating signal:
- controlling the heat being introduced into the cooking space by the heat source;
- adjusting the rotation speed of the stirrer;
- controlling the addition of some new food materials into the cooking space.

Examples of user interface devices include a manually actuated button, a display, a touch screen, a keypad, a voice activated input device, an audio output, an indicator (e.g., lights), a switch, a knob, a modem, and a networking card, among others. Especially, the user interface device may be configured to allow a user instruct the device or apparatus with which the user interface is functionally coupled by with the user interface is functionally comprised. The user interface may especially include a manually actuated button, a touch screen, a keypad, a voice activated input device, a switch, a knob, etc., and/or optionally a modem, and a networking card, etc.. The user interface may comprise a graphical user interface. The term "user interface" may also refer to a remote user interface, such as a remote control. A remote control may be a separate dedicate device. However, a remote control may also be a device with an App configured to (at least) control the system or device or apparatus.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element.

### BRIEF DESCRIPTION OF THE DRAWINGS

One embodiment of the invention will now be described, by way of example only, with reference to the accompanying schematic drawings in which corresponding reference symbols indicate corresponding parts, and in which:
Fig. 1 shows a cooking apparatus in a perspective view;
Fig. 2 shows schematically a top view of the cooking space of the cooking apparatus;
Fig. 3 shows the top view of the cooking space of the cooking apparatus with food material being stirred in the cooking space;
Fig. 4 shows a diagram of the power during cooking of the food materials in the cooking space;
Fig. 5 shows a diagram of the pressure during cooking of the food materials in the cooking space; and
Fig. 6 shows a diagram of the temperature during cooking of the food materials in the cooking space.

The schematic drawings are not necessarily on scale.

### DETAILED DESCRIPTION OF THE EMBODIMENTS

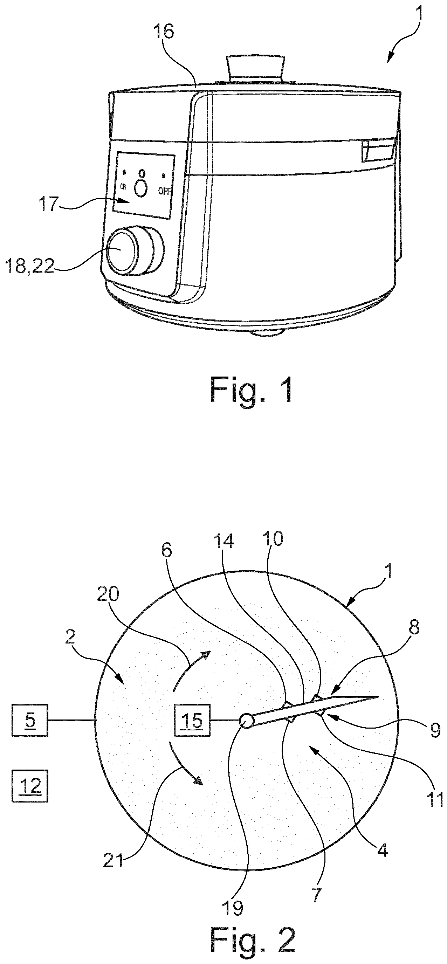

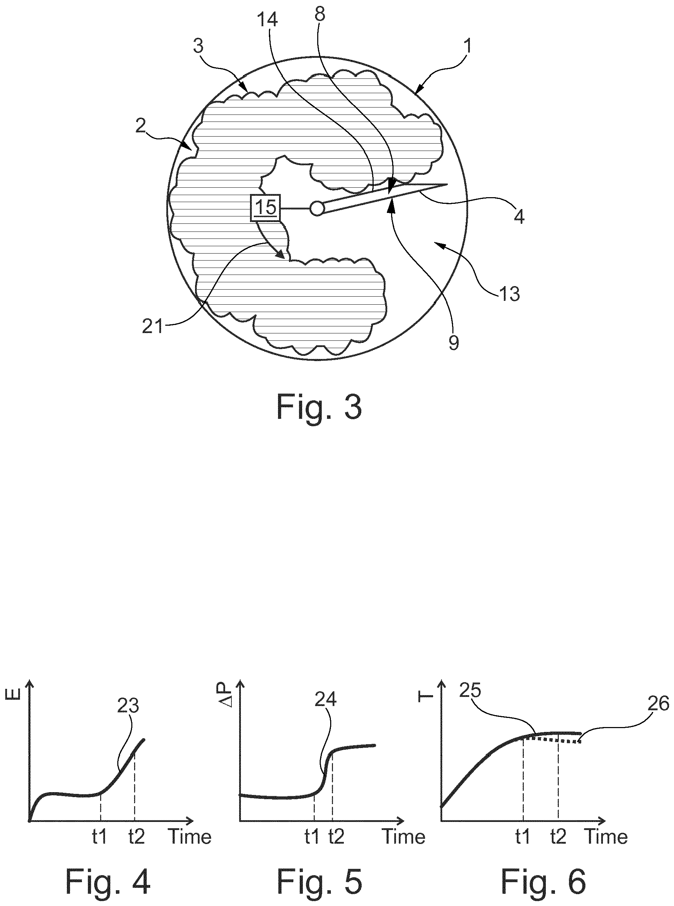

Fig. 1 depicts a cooking apparatus 1 in a perspective view having a cooking space 2 (shown in fig. 2 and 3) that is closable by a cover 16. Furthermore, the cooking apparatus 1 comprises a display 17 and a user interface 22 that is formed as a control knob 18, both being connected to a data feedback system 12 (shown in fig. 2).

Fig. 2 schematically depicts the cooking space 2 viewed from above. A stirrer 4 for stirring food materials (3) (shown in Fig. 3) includes a stirring element 14 which is rotatable around a rotation axis 19 by an actuator 15. The stirring element 14 is rotatable around the rotation axis 19 by the actuator 15 in a clockwise direction 20 and an anti-clockwise direction 21. The stirring element 14 comprises a first temperature sensor 6 and a first pressure sensor 10 on the first side 8 towards the anti-clockwise rotational direction 21 and a second temperature sensor 7 and a second pressure sensor 11 on the second side 9 towards the clockwise rotational direction 20. These sensors are shown schematically only, it is to be acknowledged that these sensors can in particular be implemented in the stirring element 14 in such a way that a steady or even straight surface of the stirring element 14 in the respective region is formed.

Heat is applied into the cooking space 2 of the cooking apparatus 1 by a heat source 5, wherein the amount of the heat being applied into the cooking space 2 and the rotation speed of the stirrer are controllable based on a resistance indicating signal being representative for the current resistance of the food materials 3 (shown in fig. 3) being cooked in the cooking space 2, wherein the resistance indicating signal is generated by means of the stirrer 4.

Fig. 3 shows the cooking space 2 of the cooking apparatus 1 during cooking of food materials 3. In fig. 3 the stirring element 14 of the stirrer 4 is driven by the actuator 15 in the anti-clockwise rotational direction 21. Due to the advanced evaporation of the liquids a resistance of the food materials 3 has increased. Thereby the food materials 3 accumulate on the first side 8 of the stirring element 14 so that an empty space 13 is formed on the second side 9 of the stirring element 14 of the stirrer 4. Thus, a first temperature and first pressure on the first side 8 is higher than a second temperature and second pressure on the second side 9 of the stirring element 14.

Fig. 4 shows a first curve 23 of a determined electric power consumption of the actuator 15 depicting a trend of the electric power consumption during cooking of the food materials 3. Fig. 5 shows a second curve 24 of a determined pressure difference between the first pressure and the second pressure depicting a trend of the pressure difference during cooking of the food materials 3. Fig. 6 shows a third curve 25 of a first temperature and a fourth curve 26 of a second temperature depicting a trend of the first temperature and the second temperature during cooking of the food materials 3. In all diagrams start point t1 is the time at which the liquid e.g. water starts evaporating so that the resistance of the food materials 3 starts to increase and the empty space 13 arises. Before the start point t1 the food materials 3 and liquids are heated up and the electric power consumption of the actuator 15 as well as the pressure difference are essentially constant (cp. Fig. 4). Furthermore, before the start point t1 the pressure difference is close to 0 (cp. Fig. 5) and the first temperature on the first side 8 and the second temperature of the second side 9 of the stirring element 14 increase parallelly (cp. Fig. 6). At the start point t1 the empty space 13 shows up and the second temperature on the second side 9 of the stirring element 14 starts to differ from the first temperature on the first side 8 of the stirring element 14. At the start point t1 the adjustment of the introduction of the heat into the cooking space 2 and/or the rotation speed of the stirring element 14 is started by the data feedback system 12. After the start point t1 the electric power consumption of the actuator 15, the pressure difference and the temperature difference increase. As soon as the data feedback system 12 detects that the electric power consumption of the actuator 15, the pressure difference, and the temperature difference have reached predetermined thresholds, which for instance are stored in a data memory of the data feedback system 12 and/or are dedicated to a specific recipe, an end point t2 is reached at which the adjustment of the amount of heat being applied into the cooking space 2 and/or the rotation speed of the stirring element 14 is stopped by the data feedback system 12. In particular, the data feedback system 12 turns off the heat source 5 and/or the rotation of the stirring element 14 at the end point t2 and informs a user that the cooking process of the food materials 3 is finished, e.g. via the display 17 (shown in fig. 1) and/or an acoustic signal. That means that at the end point t2 the food materials 3 are well cooked and/or the liquids in the food materials 3 are almost or completely evaporated. On the y-axis, in Fig. 4 the power in arbitrary units, in Fig. 5 delta pressure in arbitrary units, and in Fig. 6 temperature in arbitrary units are depicted respectively, and on the x-axis the time in arbitrary units is depicted.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to". The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings. The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A method for preparing food materials (3) within a cooking apparatus (1), wherein the cooking apparatus (1) includes a stirrer (4) with a stirring element (14) and an actuator (15) configured for driving the stirring element (14), and wherein the method comprises:
a) stirring the food materials (3) in a cooking space (2) of the cooking apparatus (1) by the stirring element (14) with heat applied by a heat source (5); and
b) adjusting the introduction of the heat into the cooking space (2) by the heat source (5) and/or a rotation speed of the stirrer (4);
**characterized in that** the amount of the heat being applied into the cooking space (2) and/or the rotation speed of the stirrer (4) are at least controlled based on a resistance indicating signal being representative for the current resistance of the food materials (3) being stirred and cooked in the cooking space (2), and the resistance indicating signal is generated by means of the stirrer (4).

2. The method according to claim 1, wherein the resistance indicating signal is based on an electric power consumption of the actuator (15) for maintaining a predetermined real-time stirring speed during the cooking period.

3. The method according to claim 1 or 2, wherein the stirring element (14) comprises a first side (8) towards an anti-clockwise rotational direction (21) and a second side (9) towards a clockwise rotational direction (20); and
the resistance indicating signal is based on a temperature difference between a first temperature sensed from the first side (8) and a second temperature sensed from the second side (9); and/or a pressure difference between a first pressure sensed from the first side (8) and a second pressure sensed from the second side (9).

4. The method according to claim 3, wherein the first temperature is sensed using a first temperature sensor (6) arranged at the first side (8) and the second temperature is sensed using a second temperature sensor (7) arranged at the second side (9).

5. The method according to claim 3 or 4, wherein the first pressure is sensed using a first pressure sensor (10) arranged at the first side (8) and the second pressure is sensed using a second pressure sensor (11) arranged at the second side (9).

6. The method according to any one of claims 2 to 5, wherein a start point (t1) and an end point (t2) of adjusting the introduction of the heat into the cooking space (2) and/or the rotation speed of the stirrer (4) through monitoring the electric power consumption of the actuator (15) are determined by comparing a slope of a first curve (23) of the electric power consumption with a start threshold and comparing an absolute value of the electric power consumption with an end threshold respectively.

7. The method according to any one of claims 3 to 6, wherein a start point (t1) and an end point (t2) of adjusting the introduction of the heat into the cooking space (2) and/or the rotation speed of the stirrer (4) through monitoring the pressure difference are determined by comparing a slope of a second curve (24) of the pressure difference with a start threshold and an end threshold respectively.

8. The method according to any one of claims 3 to 7, wherein a start point (t1) and an end point (t2) of adjusting the introduction of the heat into the cooking space (2) and/or the rotation speed of the stirrer (4) through monitoring the temperature difference are determined by comparing the difference value with zero and an end threshold respectively.

9. The method according to any of claims 1 to 8, wherein before the step a), the method further comprises:
a') receiving food materials input information from a user interface (22), then predetermining a relationship between the food materials input information and the resistance indicating signal for subsequent heat introduction into the cooking space (2) and/or for subsequent adaption of the rotation speed of the stirrer (4).

10. A cooking apparatus (1) for cooking food materials (3) therein, comprising:
- a cooking space (2) for cooking the food materials (3);
- a heat source (5) for introducing heat into the cooking space (2);
- a stirrer (4) for stirring the food materials (3) in the cooking space (2), the stirrer (4) including a stirring element (14) and an actuator (15) configured for driving the stirring element (14) or adjusting its rotation speed; and
- a data feedback system (12) configured for controlling the heat source (5) and/or the rotation speed of the stirrer (4) based on a resistance indicating signal generated by means of the stirrer (4).

11. The cooking apparatus (1) according to claim 10, wherein the data feedback system (12) is configured to monitor an electric power consumption of the actuator (15) for maintaining a predetermined real-time stirring speed during the cooking period.

12. The cooking apparatus (1) according to claim 10 or 11, wherein the stirring element (14) comprises a first side (8) towards an anti-clockwise rotational direction (21) and a second side (9) towards a clockwise rotational direction (20); and
the data feedback system (12) is configured to monitor a temperature difference between a first temperature sensed from the first side (8) and a second temperature sensed from the second side (9); and/or a pressure difference between a first pressure sensed from the first side (8) and a second pressure sensed from the second side (9).

13. The cooking apparatus (1) according to claim 12, wherein the stirrer (4) further includes a first temperature sensor (6) arranged at the first side (8) for sensing the first temperature and a second temperature sensor (7) arranged at the second side (9) for sensing the second temperature.

14. The cooking apparatus (1) according to claim 12 or 13, wherein the stirrer (4) further includes a first pressure sensor (10) arranged at the first side (8) for sensing the first pressure and a second pressure sensor (11) arranged at the second side (9) for sensing the second pressure.

15. The cooking apparatus (1) according to any of claims 10 to 14, further comprising a user interface for receiving food materials input information, and the data feedback system (12) is configured to take at least one of the actions listed below based on a predetermined relationship between the food materials input information and the resistance indicating signals:
- controlling the heat being introduced into the cooking space (2) by the heat source (5);
- adjusting the rotation speed of the stirrer (4);
- controlling the addition of some new food materials into the cooking space (2).
